# EUROPEAN PATENT APPLICATION

(11) **EP 2 128 761 A2**
(43) Date of publication of application: **02.12.2009**
(21) Application number: 09160952.9
(22) Date of filing: 22.05.2009
(51) Int. Cl.: G06F 9/48

(54) **Scheduling for computing systems with multiple levels of determinism**

(30) Priority: 29.05.2008 US 129427
(71) Applicant: Honeywell International Inc., Morristown, NJ 07962 (US)
(72) Inventor: Sturdy, James T., Morristown, NJ 07962-2245 (US)
(74) Representative: Buckley, Guy Julian

(57) **Abstract**

In a computing system, a method and system for scheduling software process execution and inter-process communication is introduced. Processes or groups of processes are assigned to execute within timeslots of a schedule according to associated execution frequencies, execution durations and inter-process communication requirements. The schedules allow development and test of the processes to be substantially decoupled from one another so that software engineering cycle time can be reduced.

## Description

### FIELD

The embodiments herein relate to scheduling processes in computing systems with multiple levels of determinism.

### BACKGROUND

Real-time computing systems are used in avionics, aeronautics, telecommunications, automobiles, medicine, finance, industrial control, and various military applications. Some real-time computing systems prioritize various aspects of the execution of more important processes over less important processes. In other types of real-time computing systems, specific processes (i.e., instances of an executable program) may need to be able to execute a certain number of times per quantum, and may need to be able to complete execution within a specific amount of time from when they were started. Failure to meet these constraints could result in significant inconvenience to users, financial loss, substantial damage to property, or even loss of life.

The former type of system can be referred to as a non-deterministic real-time system, wherein processes will share the computing system's resources, but exactly when a process will execute may or may not be known. The latter type of system can be referred to as a deterministic real-time system, wherein the system exhibits the ability to execute certain processes within a non-varying or minimally-varying time frame. In between these extremes are classes of systems in which certain processes may have to operate deterministically, but other processes require a lesser degree of determinism or are non-deterministic.

In order to guarantee the timely execution of processes within reasonable bounds, a schedule may be created to execute on a real time system. A software tool or a human may create the schedule, or a human may use a software tool to assist in creating the schedule. A typical schedule divides a timeline into repeating frames of a fixed length. Each frame can be further divided in a number of timeslots. A number of sequential frames may be referred to as a superframe. For example, a frame may be one second in length, and divided into fifty timeslots of twenty milliseconds each, while five consecutive frames may be referred to as a superframe and will be five seconds in length. Naturally, the lengths of frames, timeslots, and superframes are based on the specific needs of the computing system in question, and different lengths of time for each may be used.

When processes execute according to a schedule, any changes made to one of those processes may require re-validation of the entire schedule. For example, if a schedule includes three deterministic processes, process P1, process P2 and process P3, a change to any of these processes may require modification of the schedule or creation of a new schedule, because the changed process or processes may have different requirements of the computing system's resources. Any such modification of the schedule or creation of a new schedule will likely require re-testing the execution of all three processes for correctness, performance, and stability. Thus, each modification to a process can result in additional test and integration cycles for the entire computing system, and each of these cycles may further delay the completion of the computing system while incurring further cost. A goal of software engineering is to develop processes in a modular fashion, so that there are few interdependencies between processes. However, this goal can be difficult and time consuming to achieve using an integrated schedule. Therefore, it is desirable to be able to schedule real-time processes with multiple levels of determinism in such a way that their execution is substantially decoupled from one another.

### SUMMARY

A method and system of scheduling real-time processes with multiple levels of determinism is introduced. Processes are developed on separate sub-schedules and these sub-schedules are integrated into a common schedule. By doing so, each set of processes can be developed and tested separately, and integrated with minimal impact on one another. As a result, software development cycles may be accelerated while system performance requirements can still be met.

### BRIEF DESCRIPTION OF THE DRAWINGS

Figure 1 is a block diagram of a computing system;
Figure 2 is a representation of processes in a computing system;
Figure 3A is an exemplary specification of inter-process communication requirements;
Figure 3B is an exemplary specification of process execution requirements;
Figure 4 is an exemplary execution schedule;
Figure 5 is an exemplary execution schedule;
Figure 6 is a flow diagram of a method for scheduling;
Figure 7A is a flow diagram of a method for scheduling; and
Figure 7B is a flow diagram of a method for scheduling.

### DESCRIPTION

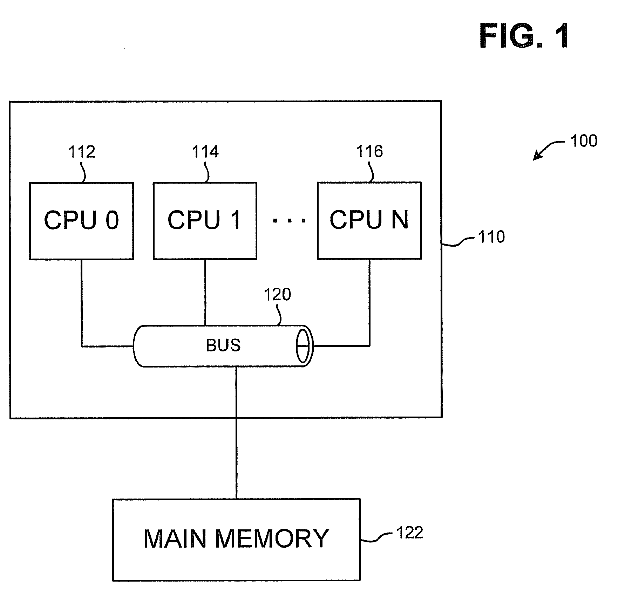

Figure 1 comprises a computing system 100, which includes multiple CPUs 110 and a memory 122. Each of the N+1 CPUs, or cores, 112, 114, 116, are preferably capable of executing one or more processes. These processes may be executed in parallel on a CPU. Each CPU is coupled, via a bus 120, to memory 122, and each CPU may be able to read from and write to memory 122. Not shown are the many additional components that typically are comprised within a modem computing system, such as caches, translation lookaside buffers, clocking logic, and so on. Computing system 100 preferably supports executing schedules of processes, wherein the processes are classified into multiple levels of determinism.

It should be understood, however, that this and other arrangements and processes described herein are set forth for purposes of example only. Other arrangements and elements (e.g., machines, interfaces, functions, orders of elements, etc.) can be added or used, and some elements may be omitted altogether. Further, as in most computer architectures, those skilled in the art will appreciate that many of the elements described herein are functional entities that may be implemented as discrete components or in conjunction with other components, in any suitable combination and location. For example, bus 120 may consist of multiple independent busses so that each CPU, 112, 114, 116, can access memory 122 without contending for a CPU bus with the other CPUs. Furthermore, computing system 100 might comprise multiple memories, and each unit of memory may comprise semiconductor memory, magnetic memory, optical memory, acoustic memory, biological memory, or any combination of these memory technologies, or any other memory technology used in conjunction with computational devices.

Modem computing systems are preferably designed around the concept of a process being the unit of execution. A computer program typically consists of a set of CPU-executable instructions. A process is an instance of execution of at least some of the instructions of a computer program. A computer program may comprise multiple processes. For example, when initially executed, a world-wide web server computer program may launch multiple processes. Each process may include the full world-wide web server functionality, and therefore would be capable of receiving world-wide web requests, processing these requests, and transmitting the appropriate world-wide web content back to the sender. By executing multiple world-wide web server processes in parallel, the computing system can serve multiple world-wide web requests in parallel. In some computing systems, the term "task" is used analogously to the term "process." The term "thread" may also be used analogously with the term "process," but some computing systems distinguish between processes and threads. For purposes of the methods and systems described herein, the term "process" shall be used interchangeably with the terms of art "task" and "thread."

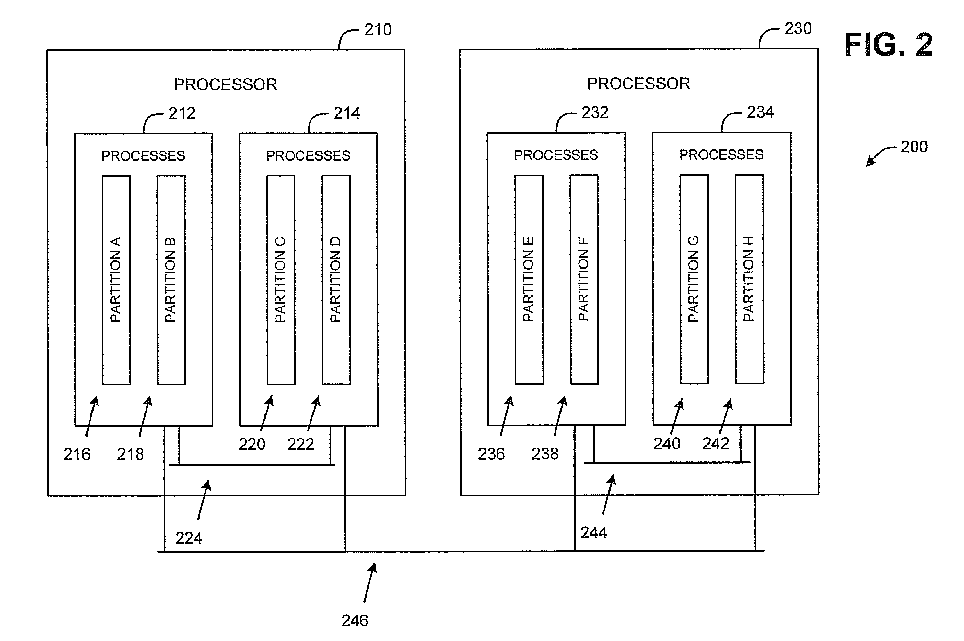

Figure 2 is a representation of the relationships between multiple processes in a computing system 200. Processor 210 is executing process sets 212 and 214. Similarly, processor 230 is executing process sets 232 and 234. Each process set 212, 214, 232, 234 may be divided into a plurality of partitions. For example, process set 212 contains partition A 216 and partition B 218. Similarly, process set 214 contains partition C 220 and partition D 222. Each partition is a process subset within a process set, wherein processes in the same partition have at least some characteristics in common. For example, processes with the same level of determinism may be placed in the same partition, processes with the same level of security may be placed in the same partition, or processes may be placed in a partition based on some other criteria.

Processes within one process set may need to communicate with processes within the same process set or another process set. For example, the processes of process set 212 are communicatively coupled 224 with the processes of process set 214. Similarly, the processes of process set 232 are communicatively coupled 244 with the processes of process set 234. Communication between processes is typically called inter-process communication (IPC). Modem computing systems support a multitude of types of IPC, including shared memory, message queues, pipes, sockets, and remote procedure calls, to name just a few. IPC may take place between processes executing on the same processor (e.g., communication paths 224 and 244), or between processes executing on different processors (e.g., communication path 246). The data transmitted from one process to others in an IPC transaction may be temporarily stored in memory 122 or may be transmitted directly from one CPU to another CPU. IPC transactions may use one or more busses in a computing system or a similar means of communication. Furthermore, each discrete unit of IPC, such as a unit of data transmitted from one process to another, may need to be transmitted at a particular frequency and may have an associated delay constraint. For example, a process within partition A 216 may need to transmit a unit of data to a process within partition D 222 every 100 milliseconds (ms) such that the process within partition D 222 receives the unit of data in no more than 50 ms. Typically, these processes and their associated communication events are combined into a single schedule, where this schedule determines when each process will execute, for how long, and when a process will transmit a unit of data to one or more other processes.

In Figure 2, processes are divided into process sets 212, 214, 232, 234 preferably to reflect software engineering practice. Development of large computing systems may require that multiple software engineering groups work together on the same system. These software engineering groups may consist of tens, hundreds, or thousands of individual engineers and support staff. The groups may be geographically dispersed, possibly working in different time zones or even on different continents. In order to facilitate the efficiency of distributed software development, each software engineering group may be given a separate process set to design, develop, test, and integrate. Thus, each of process sets 212, 214, 232, 234 may be the responsibility of a different software engineering group.

Ultimately, in order for computing system 200 to be completed, process sets 212, 214, 232, 234 may be integrated with each other so that computing system 200 can be tested as a whole. As discussed above, some processes within each process set may be deterministic. Thus, these processes may need to execute at a particular frequency, and when they execute will utilize computing system resources for a particular length of time. This requires that the designers of computing system 200 create, either manually or via the use of software tools, an execution schedule that incorporates all processes of process sets 212, 214, 232, 234. The schedule must meet any execution constraints, such as frequency, duration and IPC requirements, associated with each process. Also discussed above, the processes within process sets 212, 214, 232, 234 may need to communicate with one another. Thus, the schedule must meet any communications requirements of the processes of process sets 212, 214, 232, 234, including associated communication delay and communication jitter constraints.

Communication delay is the time between when a unit of data is produced by a first process and later consumed by a second process. A goal in schedule creation is to minimize communication latency to the maximum extent possible. Communication jitter is the variation of communication delay for a given unit of data as the schedule is repeated. For example, as frames in the schedule repeat, a unit of data may be produced by a first process and later consumed by a second process many times. Due to various considerations, such as CPU, bus, and memory utilization to name a few, the communication delay associated with the processing of the unit of data may fluctuate from frame to frame. Communication jitter is a measure of these seemingly "random" variations in delay. Like with communication delay, a goal in schedule creation is to minimize communication jitter to the maximum extent possible.

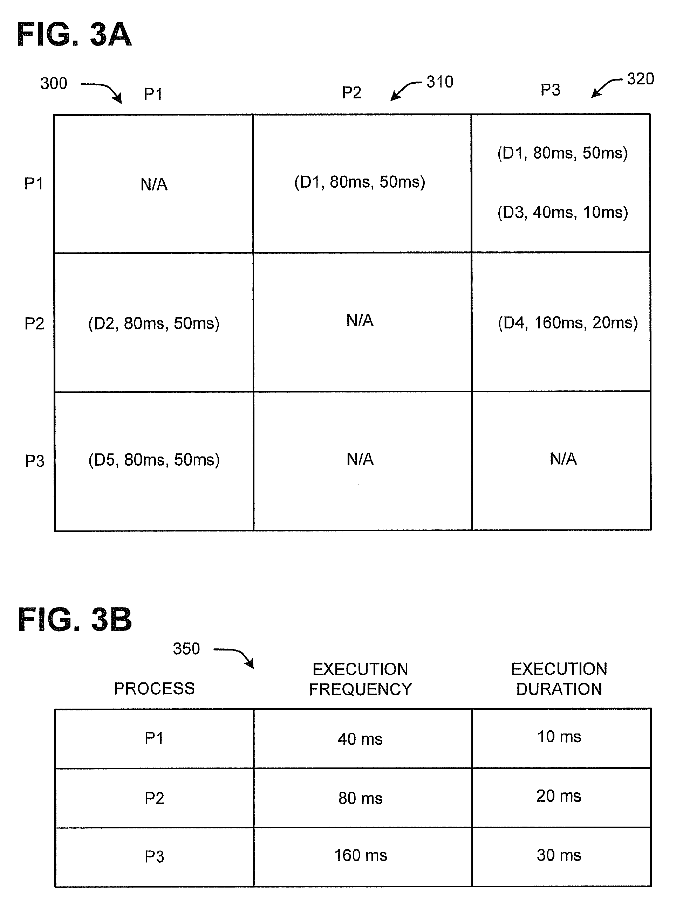

Communication between any two or more processes can be presented in many forms; however, a flexible method of representing such communication is by using a simple matrix. IPC between N processes may be represented in an N x N matrix, wherein each cell of the matrix represents data that is transmitted from one process to another process. An exemplary communication matrix 300 is illustrated in Figure 3A. Each cell of matrix 300 represents data to be communicated from a process on the vertical axis to a process on the horizontal axis. For example, in cell 310, communication from process P1 to process P2 is shown. The actual parameters of the IPC are displayed in a tuple (X, Y, Z), where X is the name of the unit of data, Y is how frequently the communication should take place, and Z is the communication delay constraint. Thus, cell 310 represents process P1 sending unit of data D1 to process P2 every 80 ms, where the time between when the data is produced by process P1 and consumed by process P2 can be no more than 50 ms. Similarly, cell 320 represents process P1 also sending unit of data D1 to process P3 every 80 ms, where the time between when the data is produced by process P1 and consumed by process P3 can be no more than 50 ms. Cell 320 also contains the requirements for another unit of data, D3, which is transmitted from process P1 to process P2 every 40 ms, with a delay constraint of 10 ms. When a transmitting process needs to transmit the same unit of data at the same frequency to more than one receiving process, the unit of data may be broadcast or multicast to its destinations.

Matrix 300 in Figure 3A is an exemplary representation of IPC. Other representations of IPC may be used within the context of the methods and systems described herein. Additionally, communication matrices similar to matrix 300 may be much larger and more complex, possibly representing hundreds of communicating processes and thousands of units of data being communicated.

Matrix 350 in Figure 3B is an exemplary set of execution requirements for processes P1, P2, and P3. In matrix 350, each process's execution frequency and duration are specified. A process's execution frequency is how often the process executes in the computing system per a given unit of time. In matrix 350, process P1's execution frequency is once every 40 ms. Alternatively, process P1's execution frequency can be said to be 25 times per second, or 25 Hz. Similarly, process P2's execution frequency is once every 80 ms, 12.5 times per second, or 12.5 Hz, and process P3's execution frequency is once every 160 ms, 6.25 times per second, or 6.25 Hz. A process's execution duration is the length of time that it will need to use system resources each time it runs. In matrix 350, process P1's execution duration is 10 ms, while process P2's execution duration is 20 ms and process P3's execution duration is 30 ms.

It should be understood that both matrix 300 and matrix 350 are simple examples of ways in which IPC requirements and process execution requirements can be represented, respectively. In a real time computing system, different means for representing IPC requirements and process execution requirements can be used, and additional factors or constraints can be included in these representations.

The combination of these IPC requirements and process execution requirements further complicates the task integrating process sets 212, 214, 232, 234. For example, assume that during integration of process sets 212, 214, 232, 234 a defect (or "bug") is discovered in a process P1 within partition A 216. Not only will this defect have to be fixed, but the process P1 will have to be retested. Furthermore, since process P1 needs to be able to integrate with potentially many other processes, some of which are deterministic, the execution schedule for process sets 212, 214, 232, 234 may need to be re-designed. Additionally, if process P1 requires communication with any other process, the schedule for process sets 212, 214, 232, 234 may need to be re-designed to incorporate this IPC, as well as any associated delay constraint.

Thus, a series of relatively minor defects in a small number of processes can cause the schedule for process sets 212, 214, 232, 234 to have to be re-designed and retested several times. Each integration test cycle may take weeks of calendar time, and the integration test process may require a large team of engineers. Thus, these minor defects add many person-weeks of additional expense, perhaps even hundreds of thousands of dollars or more, to the cost of delivering a computing system and its associated software. Consequently, any means for reducing the cost of designing, developing or testing such a system could have enormous financial advantages.

In particular, it is advantageous for the design, development, and testing of the process sets to be as loosely coupled as possible. This way, changes to one process set will have minimal or no impact on changes to another process set. In such a loosely coupled system, if a defect is found in a process P1 during some phase of design, development or testing of the computing system's software, the software engineers can fix the defect without always having to redesign the entire schedule for all process sets. This means that less integration testing of other processes and process sets is required, and therefore both time and money are saved. In order to realize these savings, improvements to methods and systems of scheduling processes are introduced. In particular, each process set or partition may be scheduled independently from some or all of the other process sets and partitions. This way, modifications may be made to one or more processes in a given set or partition without substantially impacting the schedule of the processes in other sets and partitions.

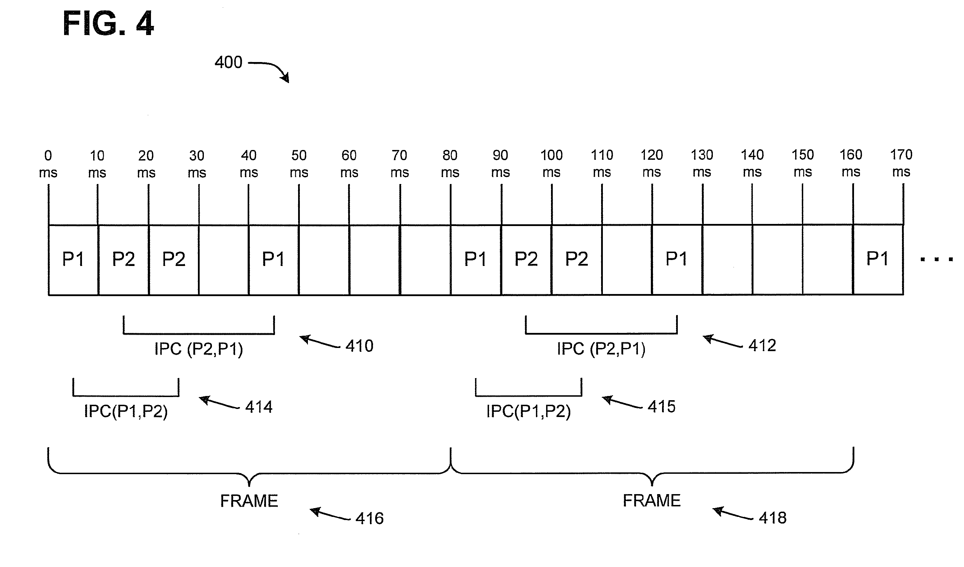

Figure 4 is a visual representation of schedule 400. Schedule 400 determines the execution timing of processes P1 and P2, as defined by matrices 300 and 350. For purposes of illustration and simplicity, process P3 is omitted from schedule 400. Also for purposes of illustration and simplicity, schedule 400 does not include certain types of overhead, such as context switching latencies and any delays associated with CPU cache misses. In an actual real-time system, these constraints would likely need to be considered when developing the schedule.

Schedule 400 is organized in 80 ms frames. Two such frames, frame 416 and frame 418, are displayed in Figure 4, but frames continue repeating for the duration of the schedule. Each frame is divided into eight 10 ms timeslots. Within each timeslot, exactly one process will execute. Processes P1 and P2 are assigned to timeslots based on their IPC and execution requirements per matrices 300 and 350. Schedule 400 also includes IPC between processes P1 and P2. Once per frame, process P1 sends unit of data D1 to process P2 (414, 415). Similarly, once per frame, process P2 sends unit of data D2 to process P1 (410, 412).

There are various means with which processes can be assigned to timeslots. For example, priority can be given to processes with the highest level of determinism or the highest level of security. Additional factors may be used alone or in combination with a process's level of determinism or level of security to decide in which slots a process should execute. Furthermore, processes should be assigned to timeslots so that all processes can execute according to their execution frequency, execution duration, and IPC constraints.

Note that there is an amount of excess capacity in schedule 400; i.e., each 80 ms frame is only at 50% utilization. This is common in real-time systems, as a portion of a schedule's capacity is preferably reserved to ensure that a real-time system does not become overloaded. If the utilization of a schedule were to approach 100%, spare capacity could be added back into the schedule by adding more CPUs, memory and busses to the system, or replacing the existing CPUs, memory and busses with faster components.

As long as schedule 400 is not adjusted, the real-time system executing schedule 400 will operate in a reasonably predictable fashion. However if changes need to be made to any of the processes in schedule 400, these changes may require modification of schedule 400. For example, suppose that process P 1 was altered so that its execution duration became 20 ms while its execution frequency and IPC requirements remained the same. In its current state, schedule 400 would not be able to support this change. In particular, the ordering of the execution of processes P1 and P2 would have to be modified so that processes P1 and P2 could both meet their execution frequency, execution duration and IPC requirements within any given frame. As discussed above, any change in schedule 400 may result in a new ordering of execution events that would have to undergo potentially extensive and costly integration testing.

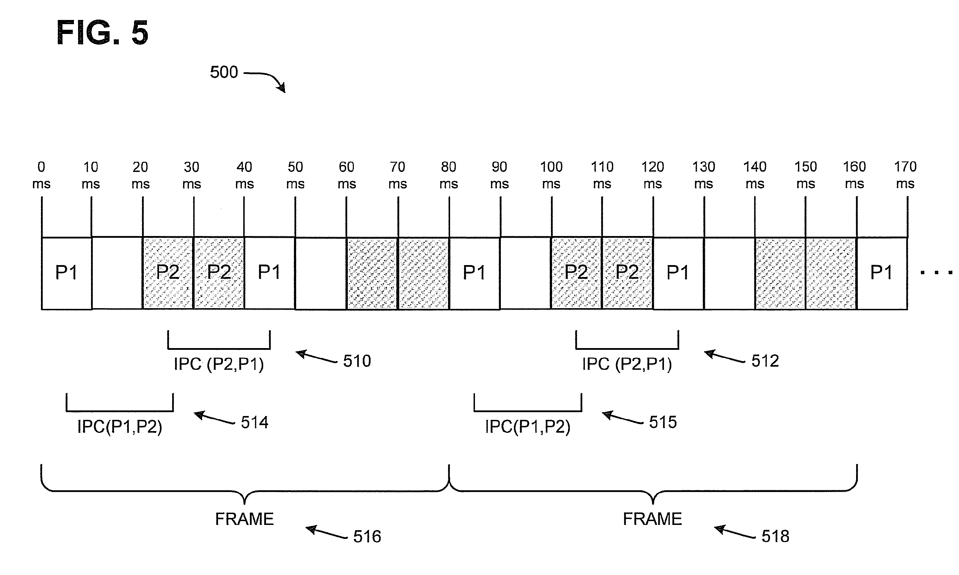

Rather than risk having to redesign and retest the computing system's execution schedule each time a change is made to a process or to IPC requirements, schedule creation and management may be able to be substantially improved. Figure 5 is a visual representation of schedule 500. Schedule 500 defines the execution timing of processes P1 and P2, as defined by matrices 300 and 350. Similar to schedule 400, process P3 is omitted from schedule 500, and schedule 500 does not include certain types of overhead, such as context switching latencies and any delays associated with CPU cache misses. Also similar to schedule 400, schedule 500 includes IPC (510, 512, 514, 515).

Schedule 500 substantially decouples the development and test of process P1 from that of process P2. The unshaded timeslots are assigned to process P1, while the shaded timeslots are assigned to process P2. This allows the software engineers who develop each process to modify their process so that it executes within the bounds of its assigned timeslots. This modification will not impact the execution schedule of the other process, unless such a modification prevents processes P1 and P2 from fulfilling their IPC requirements. For example, if process P1 is altered so that its execution duration became 20 ms while its execution frequency and IPC requirements remained the same, there would be little or no impact on process P2.

Thus, the software engineers may develop and unit test each process largely in isolation from any other process. Doing so will likely reduce the time and expense associated with software development and test cycles, because each process set or partition can be developed and tested independently from one another. In full generality, the technique illustrated by schedule 500 can be employed in larger, more complex systems that comprise tens, hundreds, or thousands of processes.

In an alternate embodiment, instead of assigning timeslots to processes, a set of timeslots may be assigned to a partition of processes or a plurality of processes. This would allow the software engineers in charge of a given partition or plurality of processes to schedule some of all of their processes within the constraints of their given timeslots, without needing to do so at the level of granularity of each process. Furthermore, the timeslots assigned to a process, partition of processes, or plurality of processes need not be contiguous and regular as in schedule 500, and may be assigned in a non-contiguous or irregular fashion.

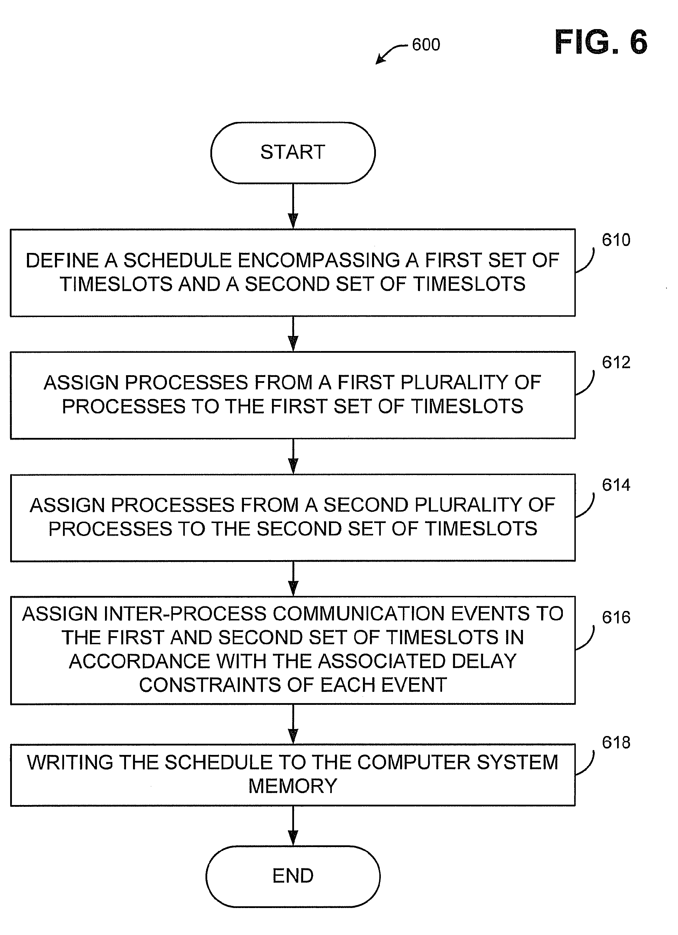

Figure 6 is directed to a method 600 for scheduling processes in accordance with the foregoing description. In step 610, a schedule is defined to encompass a first set of timeslots and a second set of timeslots. In step 612, processes from a first plurality of processes are assigned to the first set of timeslots, and, in step 614, processes from a second plurality of processes are assigned to the second set of timeslots. Preferably, the first plurality of processes are developed by one group of software engineers to execute within the first set of timeslots, and the second plurality of processes are developed by a different group of software engineers to execute within the second set of timeslots.

Furthermore, the processes of either or both of the first and second plurality of processes may be divided into partitions based on their characteristics or execution requirements. For example, the first and pluralities of processes may each be divided into partitions based on process criticality, process security, or some other factor. These processes, or the partitions of processes may execute on the same CPU or across multiple CPUs.

Additionally, method 600 is not limited to just two sets of timeslots and two pluralities of processes. For example, the schedule may be further divided into three sets of timeslots, each set associated with one of three pluralities of processes. Preferably, any such additional plurality of processes is developed by yet another group of software engineers to execute within an additional set of timeslots.

In step 616, IPC events are assigned to the first and second set of timeslots in accordance with the associated delay constraints of each event. Ideally, these IPC events are assigned to timeslots such that the transmission of a unit of data occurs during a timeslot assigned to the transmitting process and the reception of a unit of data occurs during a timeslot assigned to the receiving process. In between being transmitted and received, a unit of data may be stored in the computer system's memory 122. The assignment of processes and IPC events to timeslots is preferably in accordance with the process's execution frequency, execution duration, IPC requirements, or some combination of these factors.

At step 618, the schedule is written to computer system memory. Once written, the schedule is preferably in a form such that some parts of the schedule can be modified without having a negative impact on the other parts of the schedule. Ideally, the software engineers associated with a plurality of processes can modify their processes without requiring that any other processes be modified.

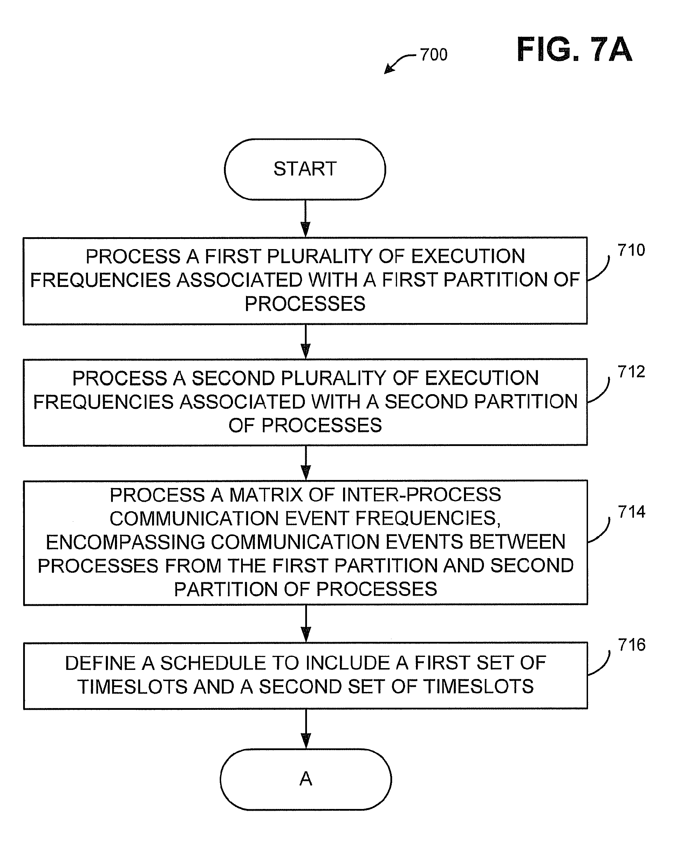

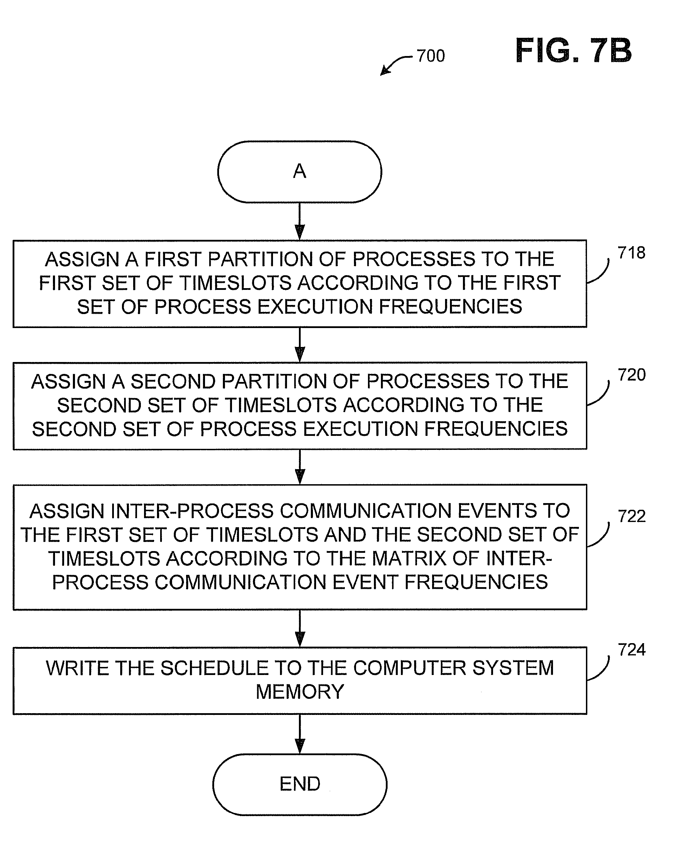

Figure 7 is directed to another method 700 for scheduling processes in accordance with the foregoing description. At step 710, a first plurality of execution frequencies associated with a first partition of processes are processed. Similarly, at step 712, a second plurality of execution frequencies associated with a second partition of processes are processed, and at step 714, a matrix of IPC event frequencies are processed. The matrix of IPC event frequencies may include communication events between processes from the first partition of processes and the second partition of processes.

Furthermore, the processes may be divided into partitions based on their characteristics or execution requirements. For example, the first and pluralities of processes may each be divided into partitions based on process criticality, process security or some other factor. These processes, or partitions of processes, may execute on the same CPU or across multiple CPUs.

At step 716, a schedule is defined to include a first set of timeslots and a second set of timeslots. At step 718, a first partition of processes is assigned to the first set of timeslots according to the first set of process execution frequencies, and at step 720, a second partition of processes is assigned to the second set of timeslots according to the second set of process execution frequencies. Additionally, at step 722, IPC events are assigned to the first set of timeslots and the second set of timeslots according to the matrix of inter-process communication event frequencies. At step 724, the schedule is written to memory 122.

The IPC events of steps 714 and 722 may include, for example, a process of the first partition of processes producing a unit of data during one of the first set of timeslots and a process of the second partition of processes consuming the unit of data during one of the second set of timeslots. Furthermore, these IPC events may include the unit of data being stored in memory 122 before it is consumed.

Similar to method 600, the each partition of processes may be developed by a group of software engineers to execute within the assigned set of timeslots. Once written to memory 122, the schedule is preferably in a form such that some parts of the schedule can be modified without having a negative impact on the other parts of the schedule. Ideally, the software engineers associated with a partition of processes can modify these processes without requiring that any other processes be modified.

Exemplary embodiments of the present invention have been described above. Those skilled in the art will understand, however, that changes and modifications may be made to these embodiments without departing from the true scope and spirit of the invention, which is defined by the claims.

## Claims

1. A method of creating a schedule, operable on a computer system and stored within computer system memory, for a first plurality of processes executing on the computer system, a second plurality of processes executing on the computer system, and a matrix of inter-process communication events with associated delay constraints occurring on the computer system, wherein the matrix of inter-process communication events includes inter-process communications between processes from the first plurality of processes and processes from the second plurality of processes, the method comprising:
defining a schedule encompassing a first set of timeslots and a second set of timeslots;
assigning processes from the first plurality of processes to the first set of timeslots;
assigning processes from the second plurality of processes to the second set of timeslots;
assigning inter-process communication events to the first and second set of timeslots in accordance with the associated delay constraints of each event; and
writing the schedule to the computer system memory.

2. The method of claim 1, wherein the processes from each of the first plurality of processes and the second plurality of processes are divided into partitions based on at least one factor selected from the group consisting of criticality and security.

3. The method of claim 1, wherein the schedule is also for a third plurality of processes executing on the computer system, and the matrix of inter-process communication events includes events involving the third plurality of processes, the method further comprising:
further defining the schedule to include a third set of timeslots;
assigning processes from the third plurality of processes to the third set of timeslots; and
assigning inter-process communication events to the third set of timeslots in accordance with the associated delay constraints of each event.

4. The method of claim 1, wherein each process from the first plurality of processes and the second plurality of processes is associated with a respective execution frequency, and wherein assigning processes from the first plurality of processes to the first set of timeslots and assigning the second plurality of processes to the second set of timeslots is done in accordance with the execution frequency of each process.

5. The method of claim 1, further comprising:
a process from the first plurality of processes producing a unit of data during one of the first set of timeslots in accordance with the matrix of inter-process communication events; and
a process from the second plurality of processes consuming the unit of data during one of the second set of timeslots in accordance with the matrix of inter-process communication events.

6. The method of claim 5, wherein the unit of data is stored in the computer system memory before it is consumed.

7. The method of claim 1, wherein the first plurality of processes and the second plurality of processes execute on different central processing units (CPUs).

8. The method of claim 1, further comprising modifying a portion of the schedule associated with the first plurality of processes without modifying a portion of the schedule associated with the second plurality of processes.
